# EUROPEAN PATENT SPECIFICATION

(11) **EP 4 050 718 B1**
(45) Date of publication and mention of the grant of the patent: **25.03.2026**
(21) Application number: 21797058.1
(22) Date of filing: 19.04.2021
(51) Int. Cl.: H01M 50/30, H01M 50/35, H01M 50/375, H01M 50/20, H01M 10/6556, H01M 10/6567, H01M 10/613, H01M 10/625, H01M 10/623, H01M 50/204, H01M 50/262, H01M 50/358, H01M 50/258

(54) **BATTERY PACK HAVING IMPROVED FIXING STRUCTURE AND GAS DISCHARGE STRUCTURE, AND ELECTRONIC DEVICE AND VEHICLE INCLUDING SAME**
BATTERIEPACK, DAS EINE VERBESSERTE BEFESTIGUNGSSTRUKTUR UND GASENTLADUNGSSTRUKTUR AUFWEIST, UND ELEKTRONISCHE VORRICHTUNG UND FAHRZEUG DAMIT
BLOC-BATTERIE AYANT UNE STRUCTURE DE FIXATION ET UNE STRUCTURE DE DÉCHARGE DE GAZ AMÉLIORÉES, ET DISPOSITIF ÉLECTRONIQUE ET VÉHICULE L'INCLUANT

(30) Priority: 29.04.2020 KR 20200052832
(43) Date of publication of application: 31.08.2022
(60) Divisional application: 26150881.6
(73) Proprietor: LG Energy Solution, Ltd., Seoul 07335 (KR)
(72) Inventor: LEE, Tae-Kyeong, Daejeon 34122 (KR); WOO, Sung-Hoon, Daejeon 34122 (KR); YOON, Young-Il, Daejeon 34122 (KR)
(74) Representative: Plasseraud IP
(86) International application number: PCT/KR2021/004903
(87) International publication number: WO 2021/221370

(56) References cited:
- CN-A- 110 190 212
- JP-A- 2014 107 178
- KR-A- 20150 139 440
- KR-A- 20190 026 682
- KR-B1- 101 749 190
- KR-B1- 101 971 930
- US-A1- 2013 130 073
- US-A1- 2017 062 783

## Description

### TECHNICAL FIELD

The present disclosure relates to a battery pack having an improved fixing structure and gas exhausting structure, and an electronic device and a vehicle including the battery pack, and more specifically, to a battery pack having a structure in which an excellent bonding strength may be secured between a battery module and a tray and a structure capable of preventing secondary explosion or thermal runaway from occurring, and an electronic device and a vehicle including the battery pack.

### BACKGROUND ART

Recently, as the demand for portable electronic products such as laptops, video cameras and mobile phones has rapidly increased and the development of electric vehicles, energy storage batteries, robots, satellites, and the like begins in earnest, a high-performance secondary battery allowing repeatedly charging and discharging is being actively researched.

Currently commercialized secondary batteries include nickel-cadmium batteries, nickel-hydrogen batteries, nickel-zinc batteries, and lithium secondary batteries. Among them, lithium secondary batteries are attracting attention since they have almost no memory effect compared to nickel-based secondary batteries to secure free charging and discharging, a very low self-discharge rate, and a high energy density.

The lithium secondary battery mainly uses a lithium-based oxide and a carbon material as a positive electrode active material and a negative electrode active material, respectively. In addition, the lithium secondary battery includes an electrode assembly in which a positive electrode plate and a negative electrode plate respectively coated with the positive electrode active material and the negative electrode active material are disposed with a separator being interposed therebetween, and an exterior for hermetically accommodating the electrode assembly together with an electrolyte, namely a battery case.

In addition, according to the shape of the exterior, the lithium secondary battery may be classified into a can-type secondary battery in which the electrode assembly is included in a metal can and a pouch-type secondary battery in which the electrode assembly is included in a pouch made of an aluminum laminate sheet.

In particular, the demand for large-capacity battery packs applied to electric vehicles is increasing recently. The large-capacity battery pack includes a plurality of battery modules. Thus, when a fire or thermal runaway occurs in some of the plurality of battery modules, the fire or thermal runaway is propagated to other adjacent battery modules. Accordingly, the stability of the battery pack is a big problem.

Moreover, the battery pack mounted to a vehicle needs to be prepared for a large impact caused by a vehicle collision. Accordingly, it is necessary to solve the problem of damage to internal components of the battery pack or fire or explosion of secondary batteries, caused by external impact. In particular, when a cooling member is damaged, a coolant inside the cooling member may be leaked to cause an electrical short between the battery modules.

Examples of background art can be found in US2017/062783A1, US2013/130073A1, KR20190026682A, KR101971930B1, KR20150139440A, CN110190212A and JP2014107178A.

### DISCLOSURE

### Technical Problem

The present disclosure is designed to solve the problems of the related art, and therefore the present disclosure is directed to providing a battery pack with increased safety in use by preventing a stress from being concentrated on a bottom surface of a tray functioning as a coolant channel and also preventing secondary explosion or thermal runaway of the battery pack from propagating to adjacent battery modules.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In accordance with the independent claim 1, there is provided a battery pack, comprising: a plurality of battery modules respectively having a pair of fixing portions provided at both longitudinal sides thereof; a tray on which the plurality of battery modules are placed; a pair of side covers configured to cover both widthwise sides of the tray and having a first fastening hole formed at a location corresponding to a coupling hole formed in the fixing portion, wherein the pair of side covers includes a gas exhaust portion and the gas exhaust portion has a shape extending in the front and rear direction; and a module fixing bar positioned at a widthwise center of the tray and shaped to extend across an upper surface of the tray along a longitudinal direction of the tray, the module fixing bar having a second fastening hole formed at a location corresponding to the coupling hole formed in the fixing portion.

Each of the plurality of battery modules may have an exhaust port configured to discharge a gas generated therein to the outside.

The tray may have an exhaust hole for discharging a gas to the outside.

The side cover may include a body portion configured to extend along the longitudinal direction of the tray and provided at one widthwise side and the other widthwise side of the tray, respectively; and a gas exhaust portion shaped to extend inward from an inner wall surface of the body portion and having a plurality of entrances and the first fastening hole, the plurality of entrances being formed by opening a part thereof to communicate with the exhaust port respectively.

The gas exhaust portion may have a sectional area that gradually increases as being closer to the exhaust hole of the tray.

The body portion may have an inner space surrounded by an outer wall thereof, and a reinforcing rib may be provided in the inner space to extend from an inner surface of one side thereof to an inner surface of the other side thereof.

The battery pack may further comprise a cooling pipe configured to allow a coolant to flow therein, and the side cover may further include a pipe accommodation portion configured to surround the cooling pipe so that the cooling pipe is accommodated therein.

The tray may include a temporary storage portion into which a coolant leaked from the cooling pipe flows.

The tray may include a mounting plate configured to directly contact the battery module and having a widthwise end positioned to be spaced apart from the body portion by a predetermined distance to give a gap into which the coolant flows; and a base plate positioned below the mounting plate to be spaced apart therefrom to form the temporary storage portion in which the coolant introduced through the gap is accommodated.

The side cover may further include a mounting portion provided at an outer side of the body portion and having a fastening structure to be coupled to an external device.

The battery module may include a plug configured to seal the exhaust port below a predetermined temperature and to be melted and lost over the predetermined temperature to open the exhaust port.

**In** addition, in another aspect of the present disclosure, there are also provided an electronic device and a vehicle, comprising at least one battery pack as above.

### Advantageous Effects

According to an embodiment of the present disclosure, since the plurality of battery modules are not directly fixed to the bottom surface of the tray but are fixed through the supporting unit installed across the gas exhaust portion provided at each of both widthwise sides of the tray to exhaust a gas and the widthwise center of the tray, it is possible to prevent a stress from concentrating on the bottom surface of the tray functioning as a coolant channel. Therefore, according to an embodiment of the present disclosure, it is possible to prevent the cooling function of the battery pack from being deteriorated due to loss of coolant even if a fixed part of the battery module is damaged by an external impact.

According to another embodiment of the present disclosure, in the present disclosure, since the gas exhaust portions are respectively located at one widthwise side and the other widthwise side of the tray to extend along the longitudinal direction of the tray, a high-temperature gas generated from at least one of the plurality of battery modules may be discharged to the outside through the gas exhaust portions without raising the temperature of adjacent battery modules, thereby enhancing the safety of the battery pack.

Moreover, according to still another embodiment of the present disclosure, the side cover of the present disclosure has a pipe accommodation portion formed in the form of an outer wall so that the cooling pipe is accommodated therein, and the side cover may surround and protect the cooling pipe, thereby preventing the cooling pipe from being damaged by external impact.

### DESCRIPTION OF DRAWINGS

The accompanying drawings illustrate a preferred embodiment of the present disclosure and together with the foregoing disclosure, serve to provide further understanding of the technical features of the claimed invention.
FIG. 1 is an assembled perspective view showing a battery pack according to an embodiment of the present disclosure.
FIG. 2 is an exploded perspective view showing the battery pack according to an embodiment of the present disclosure.
FIG. 3 is a perspective view showing a cell stack formed by stacking a plurality of secondary batteries, applied to the battery pack according to an embodiment of the present disclosure.
FIG. 4 is a partial sectional view showing the battery pack, taken along the line C-C of FIG. 1.
FIG. 5 is a partial sectional view showing a gas exhaust path of the battery pack according to an embodiment of the present disclosure.
FIG. 6 is a bottom view showing a battery module applied to the battery pack according to an embodiment of the present disclosure.
FIG. 7 is an enlarged bottom view showing the exhaust port of FIG. 6.

### BEST MODE

Hereinafter, preferred embodiments of the present disclosure will be described in detail with reference to the accompanying drawings.

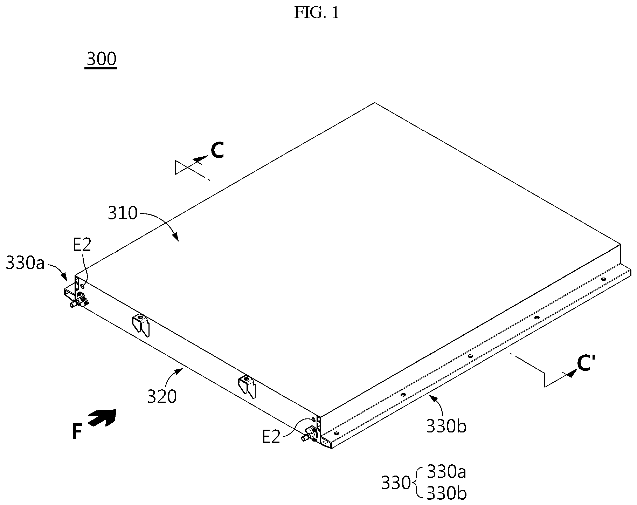

Referring to FIGS. 1 to 3, a battery pack 300 according to an embodiment of the present disclosure includes a plurality of battery modules 200, a tray 320, an upper cover 310, and a pair of side covers 330, 330a, 330b.

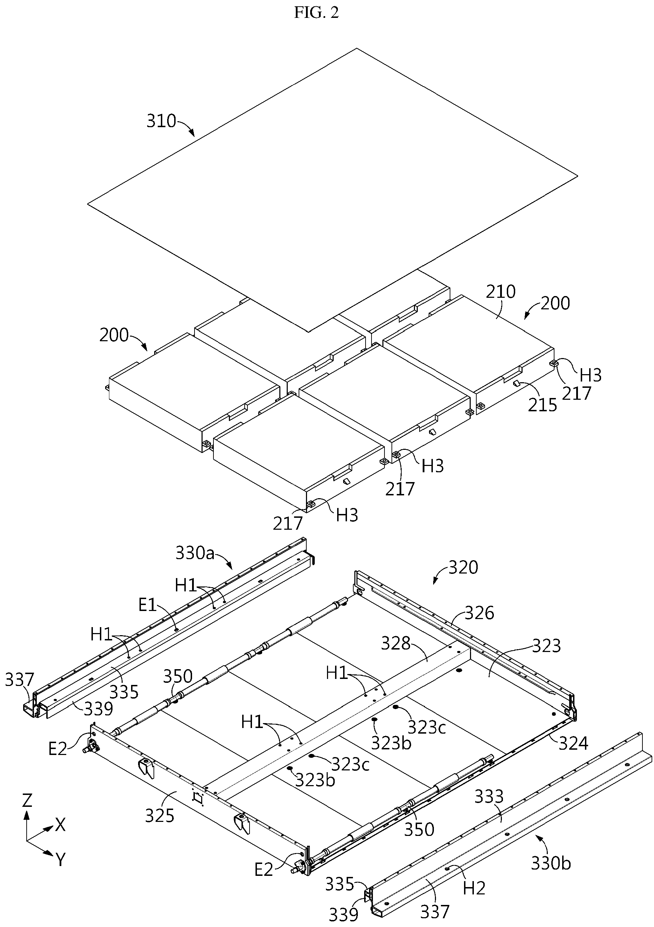

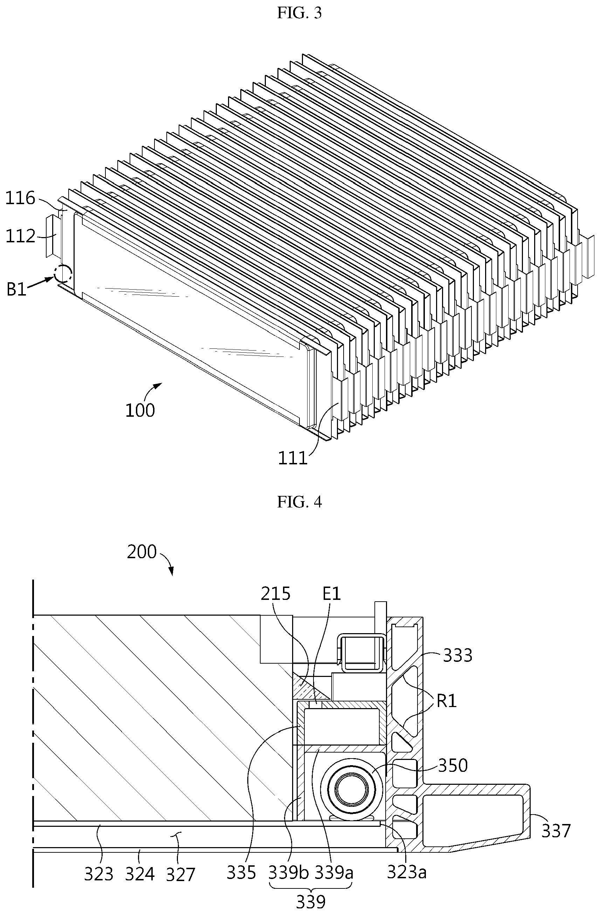

Specifically, the battery module 200 may include a plurality of secondary batteries 100. The secondary battery 100 may be a pouch-type secondary battery 100 including an electrode assembly (not shown), an electrolyte (not shown), and a pouch case 116 for accommodating them therein. For example, as shown in FIG. 3, when viewed directly in the F direction (shown in FIG. 1), inside one battery module 200, 21 pouch-type secondary batteries 100 may be accommodated in a module housing 210 to be stacked in a longitudinal direction (a direction parallel to the X axis of FIG. 2) of the battery pack 300.

Also, as shown in FIG. 3, a positive electrode lead 112 and a negative electrode lead 111 may be drawn out in opposite directions along a width direction (a direction parallel to the Y axis of FIG. 2) of the battery pack 300. That is, the positive electrode lead 112 may be provided at one end with respect to the center of the secondary battery 100. In addition, the negative electrode lead 111 may be provided at the other end with respect to the center of the secondary battery 100.

In addition, the secondary battery 100 may be provided in a form in which a body is vertically upright with respect to a horizontal plane (X-Y plane in FIG. 2). The body of the secondary battery 100 may be elongated along the width direction (a direction parallel to the Y axis in FIG. 2) of the battery pack 300. In addition, the plurality of secondary batteries 100 may be configured to discharge a gas along one width direction and/or the other width direction of the battery pack 300 when abnormal behavior such as fire or thermal runaway occurs. For example, when the secondary battery 100 is a pouch-type battery cell, a part B1 of a sealing portion at one longitudinal side or the other longitudinal side of the pouch case 116 may be formed to have a weak sealing force. Alternatively, a part of the sealing portion of one e longitudinal side or the other longitudinal side of the pouch may be formed to have a narrower sealing area than the remaining part.

Therefore, according to this configuration of the present disclosure, in the present disclosure, when an abnormal behavior occurs in the plurality of secondary batteries 100, a gas may be discharged in one longitudinal direction or the other longitudinal direction, so that the gas discharge direction may be induced to a intended direction (toward an exhaust port, explained later) inside the battery module 200. Accordingly, it is possible to reduce gas stagnant inside the battery module 200, thereby effectively preventing a secondary explosion of the secondary battery 100 from occurring inside the battery module 200 or preventing a fire from becoming larger.

However, in the battery pack 300 according to the present disclosure, not only the pouch-type battery cell 100 described above is applied, but various types of battery cells known at the time of filing of this application may be employed.

The battery pack 300 may include at least one bus bar (not shown) configured to electrically interconnect the plurality of secondary batteries 100 to each other. Specifically, the bus bar may include a conductive metal, for example, copper, aluminum, nickel, or the like.

Further, the battery pack 300 may include a wire-type bus bar (not shown) for electrically connecting the plurality of battery modules 200 to each other.

Meanwhile, each of the plurality of battery modules 200 may include an exhaust port 215. The exhaust port 215 may be provided as an opening to discharge the gas generated inside the battery module 200 to the outside. The exhaust port 215 is preferably formed only at one side of the battery module 200. The exhaust port 215 is preferably formed only in a direction toward the outer side of the battery pack 300 among both ends of the battery module 200 in the longitudinal direction (a direction parallel to the Y axis in FIG. 2). This is to prevent that high-temperature gas discharge lines of a pair of battery modules 200 facing each other become close to each other.

That is, in the battery pack 300 according to the present disclosure, a pair of battery module 200 are arranged to face each other along the width direction (a direction parallel to the Y axis) of the battery pack 300 on the tray 320, and at least two battery modules 200 are successively arranged the longitudinal direction (a direction parallel to the X axis) of the battery pack 300. In the battery pack 300, if the battery modules 200 facing each other have a structure for discharging a high-temperature gas toward each other, this may cause the temperature inside the battery pack 300 to rise. Thus, the exhaust port 215 is formed only at the outer side of the battery pack 300 so that the high-temperature gas may be discharged toward the outside of the battery pack 300.

Meanwhile, the exhaust port 215 may have a tube shape protruding toward the side cover 330. The exhaust port 215 may be configured such that an end of the tube shape is connected to an entrance E1 to communicate with the inside of the side cover 330.

In addition, the tray 320 may be configured such that the plurality of battery modules 200 are mounted thereon. The tray 320 may include a mounting plate 323 extending in a horizontal direction (a direction parallel to the X-Y plane). Further, the tray 320 may have a base plate 324 coupled to a lower portion of the mounting plate 323. The tray 320 may include a front frame 325 and a rear frame 326 in the form of an upright plate in an upper and lower direction (a direction parallel to the Z axis). The front frame 325 may be coupled to one end of the mounting plate 323 in the longitudinal direction (a direction parallel to the X axis). The rear frame 326 may be coupled to the other end of the mounting plate 323 in the longitudinal direction (a direction parallel to the X axis).

Moreover, the tray 320 may have an exhaust hole E2 for discharging a gas to the outside. For example, as shown in FIG. 2 , the exhaust hole E2 may be formed at both ends of the front frame 325 in the longitudinal direction (a direction parallel to the Y axis), respectively. The exhaust hole E2 may have an open shape so that the inside of the battery pack 300 may communicate with the outside.

In addition, the upper cover 310 may be coupled to an upper portion of the tray 320. The upper cover 310 may have a size capable of covering the plurality of battery modules 200 mounted on the tray 320.

Referring to FIG. 4 along with FIG. 2, the side cover 330 may have a shape elongated in one direction (Y-axis direction). The side cover 330 may be formed by extrusion molding. One end of the side cover 330 in the longitudinal direction (a direction parallel to the X axis) may be coupled to the front frame 325. The other end of the side cover 330 in the longitudinal direction may be coupled to the rear frame 326.

Further, the side cover 330 may be positioned at one end and the other end of the mounting plate 323 of the tray 320 in the width direction (a direction parallel to the Y axis), respectively. For example, as shown in FIGS. 2 and 4, two side covers 330 may include body portions 333 positioned at one widthwise end and the other widthwise end of the mounting plate 323, respectively. Accordingly, the body portions 333 may serve as a left wall and a right wall of the battery pack 300. The body portions 333 may have a shape extending in a front and rear direction (a direction parallel to the Y axis). For example, the body portions 333 may have a plate shape extending in the front and rear direction by extrusion molding. The body portions 333 may have an upright shape along the upper and lower direction (a direction parallel to the Z axis). The body portions 333 may have a plate shape with an empty inside.

In addition, the side cover 330 may have an entrance E1 formed by opening a part thereof. For example, the entrance E1 may be formed by opening a part of a gas exhaust portion 335, explained later. The entrance E1 may be configured so that the inside of the side cover 330 may communicate with the outside. Each of a plurality of entrances E1 may be connected to the exhaust port 215. That is, the entrance E1 may be configured to face the opening of the exhaust port 215 so that the gas exhaust portion 335 and the exhaust port 215 communicate with each other.

Moreover, the gas exhaust portion 335 may have a shape extending in one direction to transport the gas introduced from the entrance E1 to the exhaust hole E2. The gas exhaust portion 335 may be formed inside the body portion 333. That is, the gas exhaust portion 335 may have a shape extending inward from an inner wall surface of the body portion 333. The gas exhaust portion 335 may have a tube shape extending in the front and rear direction and having an empty inside by an extrusion method. As shown in FIG. 2, each of the two side covers 330 includes a gas exhaust portion 335, and the gas exhaust portion 335 has a shape extending in the front and rear direction. A front end of the gas exhaust portion 335, namely one end in the longitudinal direction (a direction parallel to the X axis), may be configured to be connected to the exhaust hole E2 provided in the front frame 325.

In addition, the gas exhaust portion 335 may be positioned above a pipe accommodation portion 339, explained later. Accordingly, the gas exhaust portion 335 may utilize the empty space in the upper and lower direction (Z-axis direction) of the battery pack 300, so that a greater number of battery modules 200 may be mounted on the tray 320. That is, the energy density of the battery pack 300 may be increased.

As described above, in the present disclosure, the pair of side covers 330a, 330b include body portions 333 configured to elongate in one direction and respectively positioned at one side and the other side of the tray 320, a plurality of entrances E1 formed by opening a part of the body portion 333 and respectively connected to the exhaust port 215, and a gas exhaust portion 335 configured to transport the gas introduced from the entrance E1 to the exhaust hole E2. Therefore, in the battery pack 300 according to the present disclosure, the high-temperature gas generated by abnormal behavior such as fire or thermal runaway in any one of the plurality of battery modules 200 may be discharged to the outside through the gas exhaust portion 335 without raising the temperature of adjacent battery modules 200, thereby increasing the safety of the battery pack 300.

That is, according to the present disclosure, the high-temperature gas generated from the battery module 200 may be transported to the side cover 330 positioned opposite to the location where other battery modules 200 are located, thereby minimizing the influence of the high-temperature gas. Accordingly, when a fire or thermal runaway occurs in one battery module 200, it is possible to effectively prevent the thermal runaway or fire from successively propagating to other adjacent battery modules 200.

Moreover, since the side cover 330 is positioned at one widthwise side or the other widthwise side of the tray 320, it is possible to protect the plurality of battery modules 200 from impacts in the front and rear direction and in the left and right direction. Accordingly, the stability of the battery pack 300 may be improved.

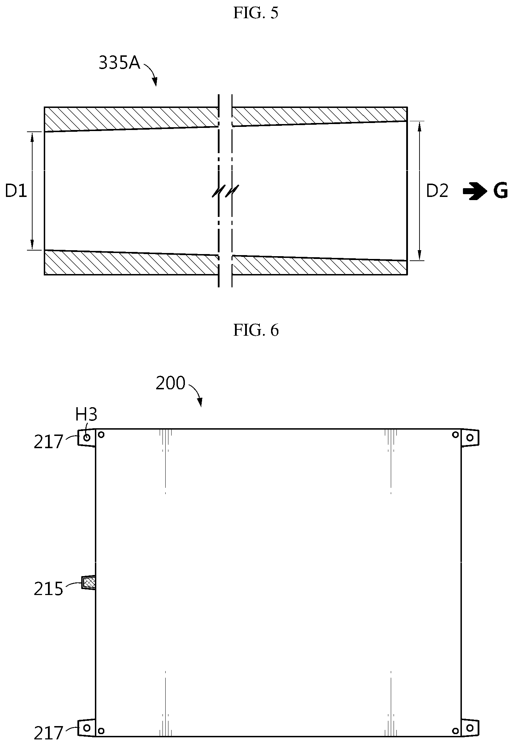

FIG. 5 is a partial sectional view showing a gas exhaust path of the battery pack according to an embodiment of the present disclosure.

Referring to FIG. 5 along with FIGS. 2 and 4, the gas exhaust portion 335A applied to the present disclosure may be configured such that a sectional area of the inner tube thereof gradually increases as being closer to the exhaust hole E2 of the tray 320 from a location farther away therefrom. That is, in the gas exhaust portion 335A, an inner diameter D1 of the inner pipe at a location far from the exhaust hole E2 of the tray 320 may be smaller than an inner diameter D2 at a location close to the exhaust hole E2.

Accordingly, regarding the internal pressure of the gas exhaust portion 335A, the internal pressure at a portion close to the exhaust hole E2 may be smaller than that at a portion far from the exhaust hole E2. Accordingly, the gas introduced into the gas exhaust portion 335A may be induced to move toward the exhaust hole E2 of the gas exhaust portion 335A where a relatively low pressure is formed.

According to this configuration of the present disclosure, gas may be discharged smoothly, thereby improving the safety of the battery pack 300 in use.

Meanwhile, referring again to FIG. 4 along with FIG. 2, the body portion 333 of the side cover 330 may have an inner space surrounded by an outer wall thereof. In the inner space, a reinforcing rib R1 extending from an inner surface of one side thereof to an inner surface of the other side thereof may be provided. For example, as shown in FIG. 4, an inner space surrounded by the outer wall may be formed inside the body portion 333 of the side cover 330. In the inner space, at least one reinforcing rib R1 may have a form extending from the inner surface of one side thereof to the inner surface of the other side thereof.

The reinforcing rib R1 may have a shape extending from a front end of the body portion 333 to a rear end thereof. The reinforcing rib R1 may be provided not only to the body portion 333 of the side cover 330 but also to the gas exhaust portion 335, a mounting portion 337, explained later, and a pipe accommodation portion 339. That is, the gas exhaust portion 335, the mounting portion 337 and the pipe accommodation portion 339 are components of the side cover 330, and when an external shock of the battery pack 300 occurs, additional rigidity may be secured through the reinforcing rib R1, thereby protecting the battery modules 200 and other components in the battery pack 300.

As described above, in the present disclosure, it is possible to effectively increase the mechanical rigidity of the side cover 330 by forming the reinforcing rib R1 in the inner space of the side cover 330. Accordingly, the battery pack 300 may safely protect the plurality of battery modules 200 and other components from external impacts in the left and right direction and the front and rear direction.

FIG. 6 is a bottom view showing a battery module applied to the battery pack according to an embodiment of the present disclosure.

Meanwhile, referring to FIGS. 2 and 6, the battery module 200 of the battery pack 300 of the present disclosure may include a module housing 210. The module housing 210 may have an inner space for accommodating the plurality of secondary batteries 100 therein. The module housing 210 may have a fixing portion 217 configured to be coupled to the side cover 330. The fixing portion 217 is provided at one longitudinal side and the other longitudinal side of the module housing 210, respectively.

A coupling hole H3 is formed in the fixing portion 217. A fastening hole H1 is formed in the side cover 330 at a location corresponding to the coupling hole H3. Specifically, the fastening hole H1 is formed in the gas exhaust portion 335 of the side cover 330. That is, a plurality of fastening holes H1 and entrances E1 are provided in an upper surface of the gas exhaust portion 335 to be spaced apart from each other along the longitudinal direction (a direction parallel to the X axis) of the gas exhaust portion 335.

A pair of outer fixing portions 217 respectively provided to a pair of battery modules 200 facing each other may be coupled to the gas exhaust portion 335 by a fastening bolt (not shown) inserted into the fastening hole H1 and the coupling hole H3. Meanwhile, in order to fix a pair of inner fixing portions 217 respectively provided to the pair of battery modules 200 facing each other, namely a pair of fixing portions 217 facing each other, to the tray 320, a separate structure is additionally required on the tray 320.

To this end, at the center of the tray 320 in the width direction (a direction parallel to the Y axis), a module fixing bar 328 shaped to extend across the upper surface of the tray 320 along the longitudinal direction (a direction parallel to the X axis) of the tray 320 and having the same height as the gas exhaust portion 335 is additionally provided. A pair of fastening holes H1 are provided in the upper surface of the module fixing bar 328 along the width direction (a direction parallel to the Y axis) of the module fixing bar 328, and the pair of fixing portions 217 respectively provided to the pair of battery modules 200 facing each other are fastened to the fastening holes H1.

As described above, in the present disclosure, the battery module 200 and the tray 320 are fastened not by directly fastening the bottom surface of the tray 320, namely the mounting plate 323, and the battery module 200, but by indirectly fastening the battery module 200 using a separate structure installed on the mounting plate 323. Accordingly, it is possible to prevent a stress from concentrating on the bottom surface of the tray 320 for fastening the battery module 200 and the tray 320, and thus it is possible to prevent that a coolant flowing through a cooling channel formed at the bottom surface of the tray 320 is lost due to an external impact to impair the cooling performance. That is, the battery pack 300 according to the present disclosure may include a coolant inlet 323b and a coolant outlet 323c formed at the mounting plate 323 serving as the bottom surface of the tray 320, and the bottom surface of the battery module 200 may be connected to the coolant inlet 323b and the coolant outlet 323c to receive and discharge a coolant. That is, the coolant inlet 323b and the coolant outlet 323c communicate with a coolant channel (not shown) formed at the mounting plate 232 serving as the bottom surface of the tray 320, and the coolant channel communicates with a cooling pipe 350, explained later.

Meanwhile, referring to FIGS. 1, 2 and 4 again, the battery pack 300 may further include a cooling pipe 350 configured to allow a coolant to flow therein. As the coolant, for example, water may be used.

In addition, the side cover 330 includes a pipe accommodation portion 339 for accommodating the cooling pipe 350 therein. The pipe accommodation portion 339 may have an outer wall shape formed to surround the cooling pipe 350. For example, as shown in FIG. 4, the outer wall of the pipe accommodation portion 339 may include a horizontal plate 339a extending inward from the inner wall of the body portion 333, and a vertical plate 339b extending downward from an end of the horizontal plate 339a. The horizontal plate 339a and the vertical plate 339b may be provided separately and joined by welding or the like, or may be integrally formed.

As described above, in the present disclosure, since the side cover 330 includes the pipe accommodation portion 339 for accommodating the cooling pipe 350 therein, it is possible to prevent the cooling pipe 350 from being damaged by an external impact.

Meanwhile, referring to FIG. 4 again, the tray 320 may include a temporary storage portion 327. Specifically, the temporary storage portion 327 may be configured such that, when a coolant leaks from the cooling pipe 350, the leaked coolant flows therein. For example, as shown in FIG. 4, the temporary storage portion 327 may be formed in the space between the mounting plate 323 and the base plate 324.

In addition, one longitudinal end 323a of the mounting plate 323 is spaced apart from the body portion 333 of the side cover 330 to give a passage through which the leaked coolant may flow into the temporary storage portion 327. That is, when a coolant leaks from the cooling pipe 350, the leaked coolant may flow into the temporary storage portion 327 through the gap between the end 323a of the mounting plate 323 and the side cover 330.

As described above, since the tray 320 includes the temporary storage portion 327 configured to allow the leaked coolant to flow therein when a coolant leaks out from the cooling pipe 350, it is possible to to prevent the leaked coolant from flowing into the battery module 200, thereby preventing a short circuit from occurring at battery module 200 by the coolant.

Meanwhile, referring to FIG. 2 again, the side cover 330 may further include a mounting portion 337. The mounting portion 337 may be provided at an outer side of the body portion 333 so as to be coupled to an external device. The mounting portion 337 may have a fastening structure to be coupled to an external device. For example, the mounting portion 337 may be coupled to a body of a vehicle. A bolting hole H2 for inserting a bolt may be formed in the mounting portion 337.

As described above, since the present disclosure further includes the mounting portion 337, it is possible to stably fix the battery pack 300 to an external device such as a vehicle body.

Moreover, the mounting portion 337 may be configured to protect the plurality of battery modules 200 positioned therein from external impact. To this end, the mounting portion 337 may have a shape protruding out of the body portion 333. The mounting portion 337 may have an empty inside. That is, the mounting portion 337 may have a shape protruding outward to absorb an impact or protect the battery pack 300 when an impact is applied to the left and right sides of the battery pack 300.

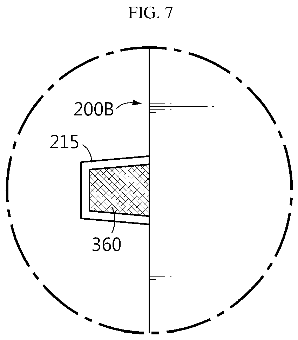

Referring to FIG. 7 along with FIGS. 4 and 6, in a battery module 200B applied to a battery pack according to another embodiment of the present disclosure, a plug 360 may be provided in the exhaust port 215. The plug 360 may seal an exit of the exhaust port 215 below a predetermined temperature. The plug 360 may be configured to be melted and lost over the predetermined temperature. For example, the plug 360 may include a material having a melting point of 200°C or above. For example, the plug 360 may include a paraffin material. The plug 360 may be melted and lost, for example, at 200°C to open the exhaust port 215.

As described above, since the battery module 200B of the present disclosure includes the plug 360 configured to seal the exhaust port 215 below the predetermined temperature and to be melted and lost over the predetermined temperature to open the exhaust port 215, a high-temperature gas of the battery module 200B caused by fire or thermal runaway melts the plug 360 to be lost, and thus, the exhaust port 215 may be opened so that the high-temperature gas is discharged to the outside. In normal use where the internal temperature is maintained below the predetermined temperature, the exhaust port 215 may be sealed to prevent external substances (especially, conductive substances) from entering the battery module 200B.

Moreover, in the battery module 200B of the present disclosure, since the plug 360 is applied, when a high-temperature gas is discharged from a battery module 200B where a fire or thermal runaway occurs, the gas moving to the gas exhaust portion 335 may be prevented from flowing through an exhaust port 215 of another adjacent battery module 200B and flowing into the battery module 200B.

Meanwhile, the battery pack 300 according to an embodiment of the present disclosure may further include various devices (not shown) for controlling the charging and discharging of the battery module 200, for example, a BMS (Battery Management System), a current sensor, a fuse, and the like..

Meanwhile, an electronic device (not shown) according to an embodiment of the present disclosure includes at least one battery pack 300 described above. The electronic device may further include a device housing (not shown) having an accommodation space for accommodating the battery pack 300 and a display unit through which a user may check the state of charging of the battery pack 300.

In addition, the battery pack 300 according to an embodiment of the present disclosure may be included in a vehicle such as an electric vehicle or a hybrid electric vehicle. That is, in the vehicle according to an embodiment of the present disclosure, the battery pack 300 according to an embodiment of the present disclosure as described above may be mounted inside a vehicle body. At this time, the side cover 330 may be configured to be coupled to the vehicle body of the vehicle.

Meanwhile, in this specification, terms indicating directions such as upper, lower, left, right, front and rear are used, but these terms are for convenience of explanation only, and may vary depending on the position of an object or the position of an observer, as being obvious to those skilled in the art.

The present disclosure has been described in detail. However, it should be understood that the detailed description and specific examples, while indicating preferred embodiments of the disclosure, are given by way of illustration only. The invention is defined by the scope of the appended claims.

## Claims

1. A battery pack (300), comprising:
a plurality of battery modules (200) respectively having a pair of fixing portions (217) provided at both longitudinal sides thereof;
a tray (320) on which the plurality of battery modules (200) are placed;
a pair of side covers (330) configured to cover both widthwise sides of the tray (320) and having a first fastening hole (H1) formed at a location corresponding to a coupling hole (H3) formed in the fixing portion (217), wherein the pair of side covers (330) includes a gas exhaust portion (335) and the gas exhaust portion (335) has a shape extending in the front and rear direction; and
a module fixing bar (328) positioned at a widthwise center of the tray (320) and shaped to extend across an upper surface of the tray (320) along a longitudinal direction of the tray (320), the module fixing bar (328) having a second fastening hole (H1) formed at a location corresponding to the coupling hole (H3) formed in the fixing portion (217).

2. The battery pack (300) according to claim 1,
wherein each of the plurality of battery modules (200) has an exhaust port (215) configured to discharge a gas generated therein to the outside.

3. The battery pack (300) according to claim 2,
wherein the tray (320) has an exhaust hole (E2) for discharging a gas to the outside.

4. The battery pack (300) according to claim 3,
wherein the side cover (330) includes:
a body portion (333) configured to extend along the longitudinal direction of the tray (320) and provided at one widthwise side and the other widthwise side of the tray (320), respectively; and
the gas exhaust portion (335) shaped to extend inward from an inner wall surface of the body portion (333) and having a plurality of entrances (E1) and the first fastening hole (H1), the plurality of entrances (E1) being formed by opening a part thereof to communicate with the exhaust port respectively.

5. The battery pack (300) according to claim 4,
wherein the gas exhaust portion (335) has a sectional area that gradually increases as being closer to the exhaust hole (E2) of the tray (320).

6. The battery pack (300) according to claim 4,
wherein the body portion (333) has an inner space surrounded by an outer wall thereof, and
a reinforcing rib (R1) is provided in the inner space to extend from an inner surface of one side thereof to an inner surface of the other side thereof.

7. The battery pack (300) according to claim 4, further comprising:
a cooling pipe (350) configured to allow a coolant to flow therein,
wherein the side cover (330) further includes a pipe accommodation portion (339) configured to surround the cooling pipe (350) so that the cooling pipe (350) is accommodated therein.

8. The battery pack (300) according to claim 7,
wherein the tray (320) includes a temporary storage portion (327) into which a coolant leaked from the cooling pipe (350) flows.

9. The battery pack (300) according to claim 5,
wherein the tray (320) includes:
a mounting plate (323) configured to directly contact the battery module (200) and having a widthwise end positioned to be spaced apart from the body portion (333) by a predetermined distance to give a gap into which the coolant flows; and
a base plate (324) positioned below the mounting plate (323) to be spaced apart therefrom to form the temporary storage portion (327) in which the coolant introduced through the gap is accommodated.

10. The battery pack (300) according to claim 4,
wherein the side cover (330) further includes a mounting portion (337) provided at an outer side of the body portion (333) and having a fastening structure to be coupled to an external device.

11. The battery pack (300) according to claim 2,
wherein the battery module (200) includes a plug (360) configured to seal the exhaust port (215) below a predetermined temperature and to be melted and lost over the predetermined temperature to open the exhaust port (215).

12. An electronic device, comprising at least one battery pack (300) according to any one of claims 1 to 11.

13. A vehicle, comprising at least one battery pack (300) according to any one of claims 1 to 11.

## Patentansprüche

1. Batteriepack (300), umfassend:
eine Mehrzahl von Batteriemodulen (200), welche jeweils ein Paar von Befestigungsabschnitten (217) aufweisen, welche an beiden longitudinalen Seiten davon bereitgestellt sind;
eine Ablage (320), an welcher die Mehrzahl von Batteriemodulen (200) platziert ist;
ein Paar von Seitenbedeckungen (330), welches dazu eingerichtet sind, beide Seiten der Breite nach der Ablage (320) zu bedecken, und welches ein erstes Befestigungsloch (H1) aufweist, welches an einer Position gebildet ist, welche einem Kopplungsloch (H3) entspricht, welches in dem Fixierabschnitt (217) gebildet ist, wobei das Paar von Seitenbedeckungen (330) einen Gasauslassabschnitt (335) umfasst und der Gasauslassabschnitt (335) eine Form aufweist, welche sich in der Vorder- und Rückrichtung erstreckt; und
eine Modulfixierstange (328), welche an einem Zentrum der Breite nach der Ablage (320) positioniert ist und derart gebildet ist, dass sie sich über eine obere Fläche der Ablage (320) entlang einer longitudinalen Richtung der Ablage (320) erstreckt, wobei die Modulfixierstange (328) ein zweites Befestigungsloch (H1) aufweist, welches an einer Position gebildet ist, welche dem Kopplungsloch (H3) entspricht, welches in dem Fixierabschnitt (217) gebildet ist.

2. Batteriepack (300) nach Anspruch 1,
wobei jedes der Mehrzahl der Batteriemodule (200) einen Auslassanschluss (215) aufweist, welcher dazu eingerichtet ist, ein Gas, welches darin generiert wird, nach außen abzuführen.

3. Batteriepack (300) nach Anspruch 2,
wobei die Ablage (320) ein Auslassloch (E2) aufweist, um ein Gas nach außen abzuführen.

4. Batteriepack (300) nach Anspruch 3,
wobei die Seitenbedeckung (330) umfasst:
einen Körperabschnitt (333), welcher dazu eingerichtet ist, sich entlang der longitudinalen Richtung der Ablage (320) zu erstrecken und jeweils an einer Seite der Breite nach und der anderen Seite der Breite nach der Ablage (320) bereitgestellt ist; und
den Gasauslassabschnitt (335), welcher derart geformt ist, dass er sich nach innen von einer inneren Wandfläche des Körperabschnitts (333) erstreckt und eine Mehrzahl von Einlässen (E1) und das erste Befestigungsloch (H1) aufweist, wobei die Mehrzahl von Einlässen (E1) gebildet ist, durch ein Öffnen eines Teils davon, um jeweils mit dem Auslassanschluss zu kommunizieren.

5. Batteriepack (300) nach Anspruch 4,
wobei der Gasauslassabschnitt (335) eine Querschnittsfläche aufweist, welche sich graduell vergrößert, je näher sie an dem Auslassloch (E2) der Ablage (320) liegt.

6. Batteriepack (300) nach Anspruch 4,
wobei der Körperabschnitt (333) einen inneren Raum aufweist, welcher von einer äußeren Wand davon umgeben ist, und
wobei eine Verstärkungsrippe (R1) in dem inneren Raum bereitgestellt ist, um sich von einer inneren Fläche einer Seite davon zu einer inneren Fläche der anderen Seite davon zu erstrecken.

7. Batteriepack (300) nach Anspruch 4, ferner umfassend:
ein Kühlrohr (350), welches dazu eingerichtet ist, einem Kühlmittel zu ermöglichen, darin zu strömen,
wobei die Seitenbedeckung (330) ferner einen Rohraufnahmeabschnitt (339) umfasst, welcher dazu eingerichtet ist, das Kühlrohr (350) zu umgeben, sodass das Kühlrohr (350) darin aufgenommen ist.

8. Batteriepack (300) nach Anspruch 7,
wobei die Ablage (320) einen temporären Speicherabschnitt (327) umfasst, in welchen ein Kühlmittel strömt, welches aus dem Kühlrohr (350) ausgetreten ist.

9. Batteriepack (300) nach Anspruch 5,
wobei die Ablage (320) umfasst:
eine Montageplatte (323), welche dazu eingerichtet ist, das Batteriemodul (200) direkt zu kontaktieren, und welche ein Ende der Breite nach aufweist, welches derart positioniert ist, dass es mit einem vorbestimmten Abstand von dem Körperabschnitt (333) beabstandet ist, um einen Spalt zu ergeben, in welchen das Kühlmittel strömt; und
eine Grundplatte (324), welche unter der Montageplatte (323) derart positioniert ist, dass sie davon beabstandet ist, um den temporären Speicherabschnitt (327) zu bilden, in welchem das Kühlmittel, welches durch den Spalt eingeführt ist, aufgenommen ist.

10. Batteriepack (300) nach Anspruch 4,
wobei die Seitenbedeckung (330) ferner einen Montageabschnitt (337) umfasst, welcher an einer äußeren Seite des Körperabschnitts (333) bereitgestellt ist und eine Befestigungsstruktur aufweist, um mit einer externen Vorrichtung gekoppelt zu sein.

11. Batteriepack (300) nach Anspruch 2,
wobei das Batteriemodul (200) einen Stöpsel (360) umfasst, welcher dazu eingerichtet ist, den Auslassanschluss (215) unter einer vorbestimmten Temperatur abzudichten und über der vorbestimmten Temperatur zu schmelzen und verloren zu gehen, um den Auslassanschluss (215) zu öffnen.

12. Elektronische Vorrichtung, umfassend wenigstens einen Batteriepack (300) nach einem der Ansprüche 1 bis 11.

13. Fahrzeug, umfassend wenigstens einen Batteriepack (300) nach einem der Ansprüche 1 bis 11.

## Revendications

1. Bloc-batterie (300), comprenant :
une pluralité de modules de batterie (200) ayant respectivement une paire de portions de fixation (217) fournies au niveau des deux côtés longitudinaux de ceux-ci ;
un plateau (320) sur lequel la pluralité de modules de batterie (200) sont placés ;
une paire de couvercles latéraux (330) configurés pour couvrir les deux côtés dans le sens de la largeur du plateau (320) et ayant un premier trou d'assujettissement (H1) formé à un emplacement correspondant à un trou d'accouplement (H3) formé dans la portion de fixation (217), dans lequel la paire de couvercles latéraux (330) comprend une portion d'échappement de gaz (335) et la portion d'échappement de gaz (335) a une forme s'étendant dans la direction avant et arrière ; et
une barre de fixation de module (328) positionnée au niveau d'un centre dans le sens de la largeur du plateau (320) et formée pour s'étendre sur une surface supérieure du plateau (320) le long d'une direction longitudinale du plateau (320), la barre de fixation de module (328) ayant un second trou d'assujettissement (H1) formé à un emplacement correspondant au trou d'accouplement (H3) formé dans la portion de fixation (217).

2. Bloc-batterie (300) selon la revendication 1,
dans lequel chacun de la pluralité de modules de batterie (200) a un orifice d'échappement (215) configuré pour évacuer un gaz généré dans celui-ci vers l'extérieur.

3. Bloc-batterie (300) selon la revendication 2,
dans lequel le plateau (320) a un orifice d'échappement (E2) pour évacuer un gaz vers l'extérieur.

4. Bloc-batterie (300) selon la revendication 3,
dans lequel le couvercle latéral (330) comprend :
une portion corps (333) configurée pour s'étendre le long de la direction longitudinale du plateau (320) et fournie au niveau d'un côté dans le sens de la largeur et de l'autre côté dans le sens de la largeur du plateau (320), respectivement ; et
la portion d'échappement de gaz (335) formée pour s'étendre vers l'intérieur à partir d'une surface de paroi intérieure de la portion corps (333) et ayant une pluralité d'entrées (E1) et le premier trou d'assujettissement (H1), la pluralité d'entrées (E1) étant formées en ouvrant une partie de celles-ci pour communiquer avec l'orifice d'échappement respectivement.

5. Bloc-batterie (300) selon la revendication 4,
dans lequel la portion d'échappement de gaz (335) a une superficie en coupe qui augmente progressivement au fur et à mesure qu'elle se rapproche de l'orifice d'échappement (E2) du plateau (320).

6. Bloc-batterie (300) selon la revendication 4,
dans lequel la portion corps (333) a un espace intérieur entouré par une paroi extérieure de celle-ci, et
une nervure de renfort (R1) est fournie dans l'espace intérieur pour s'étendre à partir d'une surface intérieure d'un côté de celui-ci jusqu'à une surface intérieure de l'autre côté de celui-ci.

7. Bloc-batterie (300) selon la revendication 4, comprenant en outre :
un tuyau de refroidissement (350) configuré pour permettre à un fluide de refroidissement de s'écouler dans celui-ci,
dans lequel le couvercle latéral (330) comprend en outre une portion de réception de tuyau (339) configurée pour entourer le tuyau de refroidissement (350) de façon à ce que le tuyau de refroidissement (350) soit reçu dans celle-ci.

8. Bloc-batterie (300) selon la revendication 7,
dans lequel le plateau (320) comprend une portion de stockage temporaire (327) dans laquelle un fluide de refroidissement sortant du tuyau de refroidissement (350) s'écoule.

9. Bloc-batterie (300) selon la revendication 5,
dans lequel le plateau (320) comprend :
une plaque de montage (323) configurée pour entrer en contact directement avec le module de batterie (200) et ayant une extrémité dans le sens de la largeur positionnée pour être espacée de la portion corps (333) d'une distance prédéterminée pour créer un interstice dans lequel le fluide de refroidissement s'écoule ; et
une plaque de base (324) positionnée en dessous de la plaque de montage (323) pour être espacée de celle-ci pour former la portion de stockage temporaire (327) dans laquelle le fluide de refroidissement introduit par le biais de l'interstice est reçu.

10. Bloc-batterie (300) selon la revendication 4,
dans lequel le couvercle latéral (330) comprend en outre une portion de montage (337) fournie au niveau d'un côté extérieur de la portion corps (333) et ayant une structure d'assujettissement devant être accouplée à un dispositif externe.

11. Bloc-batterie (300) selon la revendication 2,
dans lequel le module de batterie (200) comprend un bouchon (360) configuré pour sceller l'orifice d'échappement (215) en dessous d'une température prédéterminée et pour fondre et se détacher au-dessus de la température prédéterminée pour ouvrir l'orifice d'échappement (215).

12. Dispositif électronique, comprenant au moins un bloc-batterie (300) selon l'une quelconque des revendications 1 à 11.

13. Véhicule, comprenant au moins un bloc-batterie (300) selon l'une quelconque des revendications 1 à 11.
